# EUROPEAN PATENT APPLICATION

(11) **EP 3 012 152 A1**
(43) Date of publication of application: **27.04.2016**
(21) Application number: 15185862.8
(22) Date of filing: 18.09.2015
(51) Int. Cl.: B60Q 1/34, F21S 8/10

(54) **TURN SIGNAL LAMP DEVICE USING LASER**

(30) Priority: 24.10.2014 KR 20140144819
(71) Applicant: Hyundai Motor Company, Seoul 137-938 (KR)
(72) Inventor: Jeong, Byeong Ho, 440-734 Gyeonggi-do (KR)
(74) Representative: Hoffmann Eitle

(57) **Abstract**

A turn signal lamp device uses a laser to implement sequential lighting of a turn signal. A plurality of optical lenses (30) are horizontally arranged and applied to a turn signal lamp, and a laser source module (10) is subjected to angular rotation by an actuator mounted at a rear portion of the turn signal lamp. Thereby, a laser source (14) sequentially irradiates light onto the optical lenses (30) while rotating at a predetermined angle, easily implementing sequential lighting of the turn signal lamp.

## Description

### BACKGROUND

### (a) Technical Field

The present invention relates to a turn signal lamp device using a laser. More particularly, it relates to a turn signal lamp device using a laser to implement sequential lighting.

### (b) Background Art

Vehicle lamps are a rear combination lamp including a headlight, a taillight and a brake light, a turn signal lamp, and the like.

Generally, a turn signal lamp for indicating a driving direction of a vehicle is combined with the headlight.

Recently, LEDs have been applied to the turn signal lamp combined with a headlight in order to increase light conversion efficiency, reduce power consumption and particularly provide clear visibility.

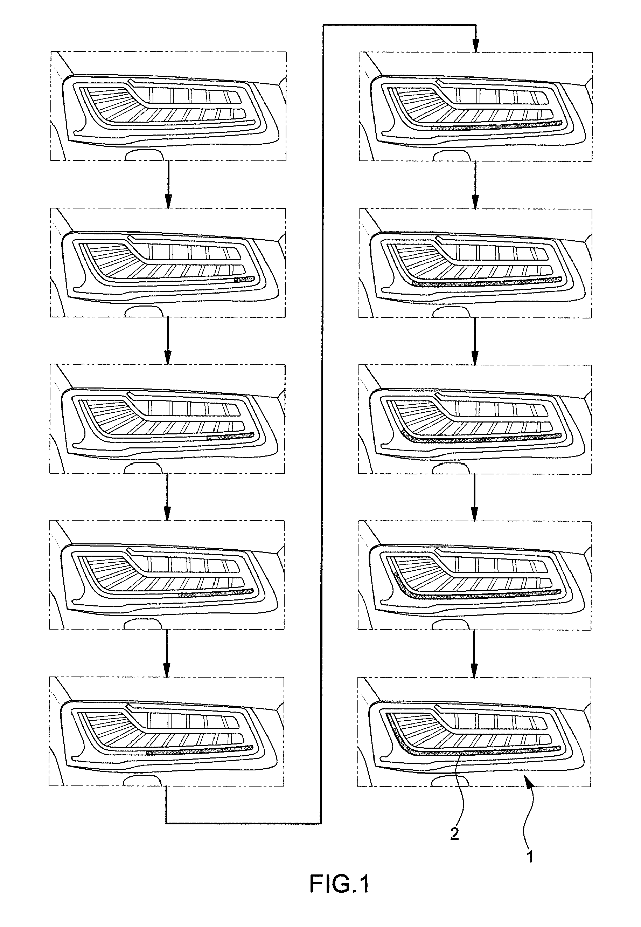

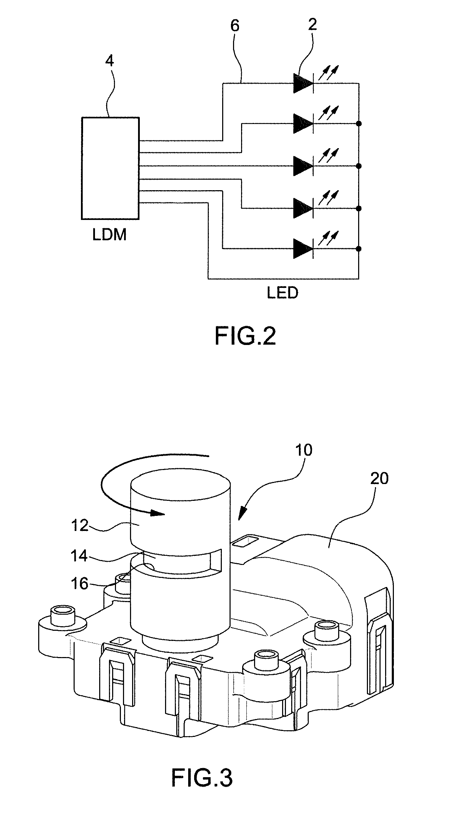

FIG. 1 is a front view showing a headlight in which LEDs are applied to a turn signal lamp. FIG. 2 is a circuit connection diagram of the headlight.

As shown in FIG. 1, a plurality of LEDs 2 are mounted along the frame of the headlight 1. If a turn signal lamp switch is on, each LED 2 repeatedly flickers at a predetermined time interval in order to indicate a driving direction.

Particularly, in order to warn a vehicle driving direction with excellent visibility, the plurality of LEDs 2 sequentially light under control of an LED drive module (LDM) 4.

Here, in order to control the sequential lighting of the LEDs, each LED 2 is connected to the LDM 4 by a single wire 6.

However, there is a problem in that an increase in cost is caused by the application of a plurality of LEDs, and circuit complexity and cost increase are further caused by use of a single wire by which each LED is connected to an LDM. In addition, there is difficulty in designing logic for controlling the lighting time of each LED to be constant.

### SUMMARY OF THE DISCLOSURE

The present invention provides a turn signal lamp device using a laser, in which a structure in which a plurality of optical lenses are horizontally arranged is applied to a turn signal lamp, and a laser source module subjected to angular rotation by an actuator is mounted at a rear portion of the turn signal lamp. Thereby, a laser source is controlled to sequentially irradiate light onto the optical lenses while rotating at a predetermined angle, easily implementing sequential lighting of the turn signal lamp.

In one aspect, the present invention provides a turn signal lamp device using a laser, where a structure in which a plurality of optical lenses are horizontally arranged is applied to a turn signal lamp. A laser source module subjected to angular rotation by an actuator is mounted at a rear portion of the turn signal lamp, so that a laser source sequentially irradiates light onto the optical lenses while rotating at a predetermined angle.

In an exemplary embodiment, the optical lens may be employed as a solid optical type lens including a condensing groove part for condensing the light of the laser source and a rear distribution body provided to be gradually extended in the external direction from the condensing groove part to diffuse the light.

In another exemplary embodiment, the actuator may be employed as a rotary type actuator to perform repetitive lateral angular rotation at a predetermined angle on the laser source module, to be fixedly mounted in a lamp housing.

In still another exemplary embodiment, the laser source module may include a laser source protection case mounted to perform angular rotation about the rotational axis of the actuator; and a laser source fixedly mounted inside the laser source protection case, to sequentially irradiate light onto the optical lenses while rotating at a predetermined angle equal to the rotational angle of the laser source protection case.

In yet another exemplary embodiment, a light source irradiation hole of a size where the light of the laser source is irradiated onto one or two optical lenses may be formed in the laser source protection case so that the light of the laser source passes through the laser source protection case.

Other aspects and exemplary embodiments of the invention are discussed hereinafter.

As described above, the present invention provides advantages as follows.

First, a structure in which the plurality of optical lenses are horizontally arranged is applied to the turn signal lamp, and the laser source module is mounted at the rear portion of the turn signal lamp, so that the laser source sequentially irradiates light onto the optical lenses while rotating at a predetermined angle, thereby easily implementing sequential lighting of the turn signal lamp.

Second, individual wires and the like including high-priced LEDs and LED drive module, used to implement the sequential lighting function of the conventional turn signal lamp, can be eliminated, reducing cost.

Third, a structure in which condensation and diffusion are possible is applied to the optical lens, so that the light of the laser source for sequential lighting can be easily diffused through the optical lenses.

The above and other features of the invention are discussed hereinafter.

### BRIEF DESCRIPTION OF THE DRAWINGS

The above and other features of the present invention will now be described in detail with reference to certain exemplary embodiments thereof illustrated the accompanying drawings which are given hereinbelow by way of illustration only, and thus are not limitative of the present invention, and wherein:
FIG. 1 is a front view showing a conventional headlight in which LEDs are applied to a turn signal lamp;
FIG. 2 is a circuit connection diagram of the headlight;
FIG. 3 is a perspective view showing a turn signal lamp device using a laser according to an embodiment of the present invention;
FIG. 4A is a front view showing the turn signal lamp device according to the embodiment of the present invention, and FIGS. 4B and 4C are sectional views taken along lines A-A and B-B of FIG. 4A, respectively;
FIGS. 5A and 5B are views showing an operational flow of the turn signal lamp device according to the embodiment of the present invention; and
FIG. 6 is a view showing a structure of an optical lens in the turn signal lamp device according to the embodiment of the present invention.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

The present invention provides a turn signal lamp device using laser, in which a structure in which a plurality of optical lenses are horizontally arranged is applied to a turn signal lamp, and sequential lighting of the turn signal lamp is easily implemented as a laser source sequentially irradiates light onto the optical lenses through a simple configuration in which a laser source module is mounted at a rear portion of the turn signal lamp.

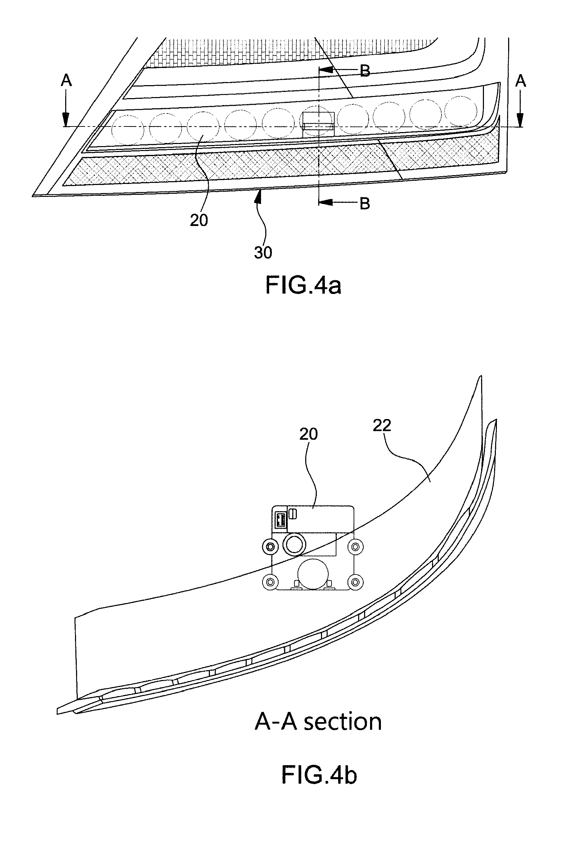

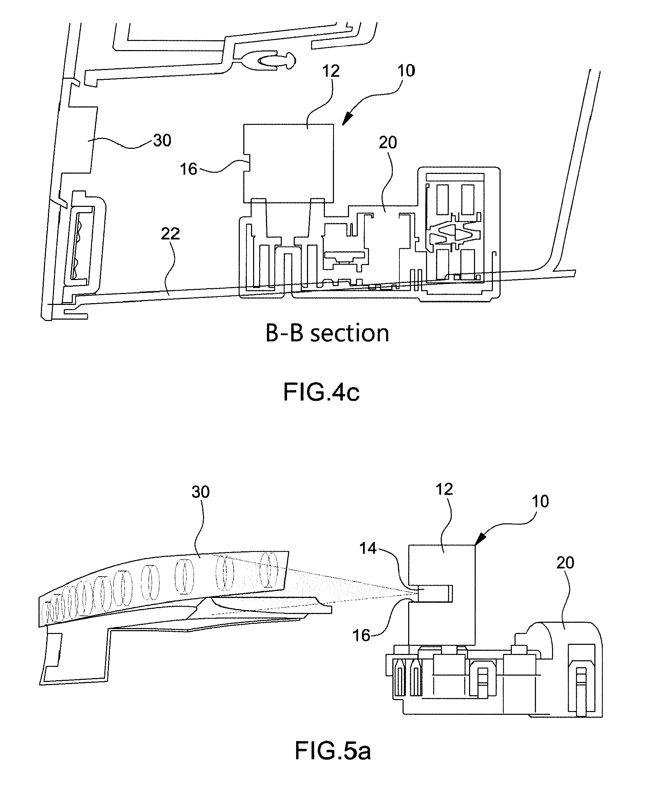

FIG. 3 is a perspective view showing a turn signal lamp device using a laser according to an embodiment of the present invention. FIG. 4A is a front view showing the turn signal lamp device according to the embodiment of the present invention, and FIGS. 4B and 4C are sectional views taken along lines A-A and B-B of FIG. 4A, respectively.

In FIGS. 3 and 4C, reference numeral 14 denotes a laser source module.

The laser source module 10 includes a laser source protection case 12 mounted to perform angular rotation about the rotational axis of an actuator 20, and a laser source 14 fixedly mounted inside the laser source protection case 12, to sequentially irradiate light onto optical lenses 30 of a turn signal lamp.

More specifically, the laser source protection case 12 is provided to have a cylindrical case structure and a structure in which a light source irradiation hole 16 for allowing a laser source 14 to irradiate light to the exterior therethrough is formed at one circumferential portion of the laser source protection case 12. The laser source 14 is fixedly mounted inside the laser source protection case 12 to sequentially irradiate light onto the optical lenses 30 of the turn signal lamp while rotating at a predetermined angle equal to the rotational angle of the laser source protection case 12.

Preferably, the light source irradiation hole 16 formed at the one circumferential portion of the laser source protection case 12 is of a size where the laser source irradiates light onto only one of the plurality of optical lenses 30 having the horizontal arrangement or a size where the laser source simultaneously irradiates light onto two optical lenses.

In this state, the actuator 20 is employed as a rotary type actuator for performing repetitive lateral angular rotation at a predetermined angle on the laser source module 10, i.e., the laser source protection case 12 and the laser source 14, to be fixedly mounted in a lamp housing 22 using a bracket or the like.

Meanwhile, the turn signal lamp is employed in the structure in which the plurality of optical lenses are horizontally arranged, to be combined with the frame of a headlight.

Preferably, in consideration that the light intensity of the turn signal lamp is low, a structure capable of satisfying light distribution by diffusing light of the laser source is applied to the optical lenses 30 applied to the turn signal lamp.

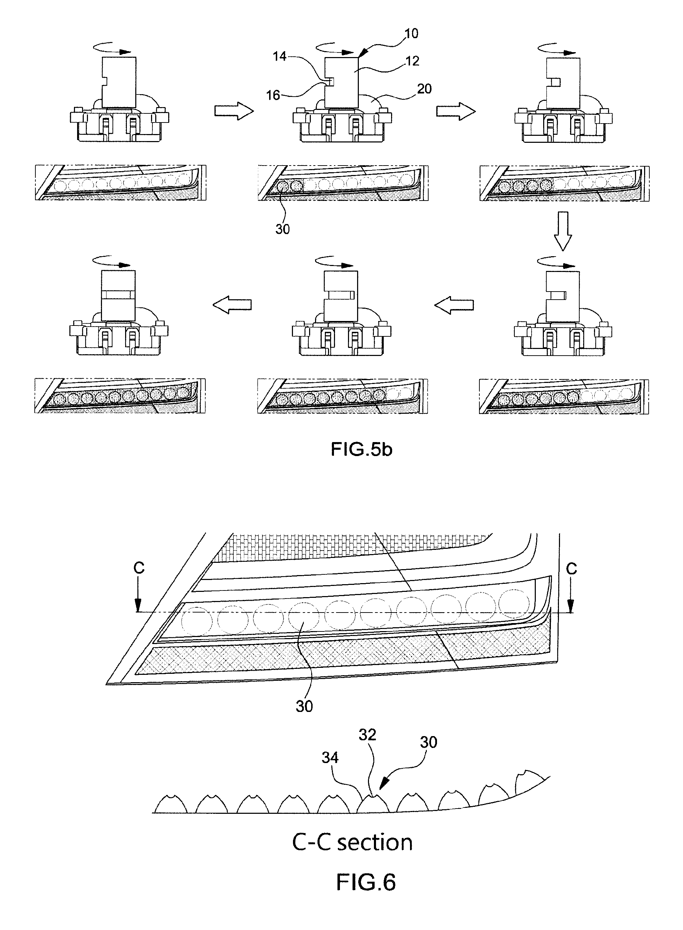

To this end, as shown in FIG. 6, the plurality of optical lenses 30 are provided to have a structure in which they are formed to protrude at an equivalent distance along the horizontal direction on a flat-type transparent support plate.

More specifically, each optical lens 30 is provided as a solid optical type lens including a condensing groove part 32 for condensing light of the laser source 14 and a light distribution body 34 with a form gradually extended in the external direction from the condensing groove part 32.

Here, an operation flow of the turn signal lamp device of the present invention configured as described above will be described as follows.

FIGS. 5A and 5B are views showing an operation flow of the turn signal lamp device according to the embodiment of the present invention.

First, if a driver turns on a turn signal lamp switch, current for lighting of the laser source 14 is applied, and simultaneously, current for driving the actuator 20 is applied.

Accordingly, the rotation axis of the actuator 20 is subjected to angular rotation clockwise from the first optical lens to the last optical lens among the plurality of optical lenses, and then subjected to angular rotation counterclockwise.

At the same time, the light source protection case 12 connected to the rotation axis of the actuator 20 is subjected to angular rotation at the same angle, and the laser source 14 in the laser source protection case 12 is also subjected to angular rotation at the same angle.

Thus, the light of the laser source 14 is irradiated onto the optical lenses 30 through the light source irradiation hole 16.

More specifically, the laser source 14 performs lateral angular rotation, so that the light of the laser source 14 is sequentially irradiated from the first optical lens 30 to the last optical lens 30 among the plurality of optical lenses 30 through the light source irradiation hole 16, thereby implementing a sequential lighting function of the turn signal lamp.

Since a light irradiation angle of the laser source 14 exists as shown in FIG. 5, the light of the laser source 14 is preferably irradiated onto two optical lenses among the plurality of optical lenses 30 at the same time.

If the light of the laser source 14 is irradiated onto each optical lens 30, the condensing groove part 32 of the optical lens 30 condenses the light, and simultaneously, the light distribution body 34 with a form gradually extended irradiates the light to the exterior while diffusing the light, so that it is possible to clearly recognize a turn signal lamp signal when viewed from the exterior of a vehicle.

As such, the structure in which the plurality of optical lenses 30 are horizontally arranged is applied to the turn signal lamp, and the laser source module 10 is mounted at the rear portion of the turn signal lamp, so that the laser source 14 sequentially irradiates light onto the optical lenses 30 while rotating at the predetermined angle, thereby easily implementing the sequential lighting function of the turn signal lamp. Further, individual wires and the like including high-priced LEDs and LED drive modules, which implement the sequential lighting function of the conventional turn signal lamp, can be excluded, thereby substantially reducing cost.

FIG. 6 is a view showing a structure of an optical lens in the turn signal lamp device according to the embodiment of the present invention.

The invention has been described in detail with reference to exemplary embodiments thereof. However, it will be appreciated by those skilled in the art that changes may be made in these embodiments without departing from the principles and spirit of the invention, the scope of which is defined in the appended claims and their equivalents.

## Claims

1. A turn signal lamp device using laser, comprising:
a plurality of optical lenses arranged horizontally and applied to a turn signal lamp;
a laser source module bearing a laser source; and
an actuator mounted at a rear portion of the turn signal lamp and arranged to subject the laser module to angular rotation;
such that a laser source sequentially irradiates light onto the optical lenses while rotating at a predetermined angle.

2. The turn signal lamp device of claim 1, wherein the optical lens is employed as a solid optical type lens including a condensing groove part for condensing the light of the laser source and a rear distribution body provided to a form gradually extended in the external direction from the condensing groove part to diffuse the light.

3. The turn signal lamp device of claim 1 or 2, wherein the actuator is employed as a rotary type actuator to perform repetitive lateral angular rotation at a predetermined angle on the laser source module, to be fixedly mounted in a lamp housing.

4. The turn signal lamp device of any one of claims 1 to 3, wherein the laser source module includes:
a laser source protection case mounted to perform angular rotation about the rotational axis of the actuator; and
a laser source fixedly mounted inside the laser source protection case, to sequentially irradiate light onto the optical lenses while rotating at a predetermined angle equal to the rotational angle of the laser source protection case.

5. The turn signal lamp device of claim 4, wherein a light source irradiation hole having a size where the light of the laser source is irradiated onto one or two optical lenses is formed in the laser source protection case so that the light of the laser source passes through the laser source protection case.
